# EUROPEAN PATENT APPLICATION

(11) **EP 2 378 479 A1**
(43) Date of publication of application: **19.10.2011**
(21) Application number: 10305382.3
(22) Date of filing: 13.04.2010
(51) Int. Cl.: G06Q 30/00

(54) **Method for managing the provisioning of an interactive application, a related system and related server**

(71) Applicant: Alcatel Lucent, 75008 Paris (FR)
(72) Inventor: Vlad, Mihai, Egham, TW20 9DZ Surrey (GB); Levene, Adam, Borehamwoord, WD65EB Herfordshire (GB); Tillotson, Samuel, London SW11 6LL (GB); Vermeulen, Steven, 2280 Grobbendonk (BE); Van Trier, Annick, 2240 Zandhoven (BE)
(74) Representative: Steeghs, Peter

(57) **Abstract**

The present invention relates to a method for managing the provisioning of an Interactive application of a plurality of interactive applications to at least one subscriber device of a plurality of subscriber devices. The managing of the provisioning of the Interactive application is under control of a central interactive application provisioning management server spanning a plurality of coupled communication networks where each communications network of the plurality of communications networks coupling a plurality of subscriber devices. The method includes the step of opting in by a subscriber of the plurality of subscribers at the central interactive application provisioning management server for requesting the provisioning of at least one Interactive application of a plurality of interactive applications to the subscriber. Furthermore the method includes the step of the interactive application provisioning management server at least based on the step of opting-in of the subscriber, selecting an interactive application for provisioning to the subscriber device associated with the communications network of the plurality of communications networks.

## Description

The present invention relates to an Interactive Application provisioning management method/server/device.

Such a method for managing the provisioning of Interactive Applications /server/device is already known in the art from Advertising-funded Mobile Service offerings operated by Mobile Virtual Network Operators that generally build revenues from advertising in order to give a set amount of free voice, text and content to their subscribers in exchange for consuming advertisements. Such Virtual Mobile Network operators provision interactive applications, called advertisements, to at least one subscriber device of a plurality of subscriber devices where each subscriber device is associated with a single communications network by means of subscription. These Virtual Mobile Network operators that provision their services based on and supported by a mobile communications network managed by a distinct Mobile network operator.

Such a Mobile Virtual Network Operator MVNO provisioning services running on a mobile communications network, such as a GSM network, with Operators may offer their customers free mobile service on the basis that these customers agree to receive mobile phone content advertising and interact with the company through advertising campaigns. Due to the fact that such Mobile Virtual network operator provides its service over a single network provisioned by a certain Mobile Network Operator the customers or subscribers thereof are only the subscribers of the mobile network operator. Hence the reach for provisioning the Mobile Virtual Network Operator MVNO service is restricted to the subscribers of the single Mobile Network.

Additional disadvantages of the mentioned prior art solutions art are the Lack of scale, a Fragmented inventory, Advertising may be perceived as spam and that there may be little or no interaction between consumer and advertiser.

An objective of the present invention is to provide with a method for managing the provisioning of Interactive Applications, the related system of the above known type but wherein a substantial enlarged potential reach of subscribers is obtained and wherein a more flexible interactive application provisioning can be obtained.

According to the invention, this object is achieved by the Method for managing the provisioning of an Interactive application as described in claim 1, the system as described in claim 7 and the related server as described in claim 9.

Indeed by managing the provisioning of an Interactive application/content to a subscribers of a plurality of subscribers, whereof each subscriber is coupled to a communications network of a plurality of communications networks, under control of a central interactive application provisioning management server that spans this plurality of communication networks, each communications network being coupled to the central interactive application provisioning management server, where each communications network of the plurality of communications networks in turn couples a plurality of subscriber devices and a subscriber of the plurality of subscribers opting-in at the central interactive application provisioning management server for requesting the provisioning of at least one Interactive application from a plurality of interactive applications to this subscriber, the interactive application provisioning management server collects the preferences of that subscriber for purposes of selecting an interactive application for provisioning to the subscriber device of the subscriber after performing the step of opting-in. As each subscriber of the plurality of subscribers is coupled to one communications network s of a plurality of communications networks and the central interactive application provisioning management server spans all of the communications networks all of the coupled subscribers can be reached for provisioning interactive applications.

The opting-in can be applied via a dialogue between the management server indicating preferences of the subscriber using e.g. an SMS-dialogue. Alternatively the opting in may be applied via a web interface providing a potential subscriber with the possibility to provide with the subscribers preferences via the completing of a certain form visualized at the web-interface.

Hence a central Interactive Application provisioning Management Device or method dealing with the overall opting in of subscribers of all associated networks and based on the interaction with the opting in subscribers determining the content to be provisioned.

By consolidating this plurality of networks an enlarged reach of subscribers of all associated networks can be obtained.

Such an interactive Application may include any multimedia content asset such as a movie or a movie-trailer, sound like a song or spoken text, text messages, images, advertisements, reduction coupons or any combination or sequence of the previously mentioned content asset.

An interactive application can be a direct marketing campaign that consists in sending a single text message to a targeted set of subscribers based on their preferences.

An interactive application can also be an advertising campaign that exchanges a scripted sequence of messages with a targeted set of subscribers, of which the first message is a teaser that presents a specific offering to those subscribers, to which the subscribers can individually respond to identify their specific interest in that offering, based on which the advertiser sends one out of several offers to each of the subscribers who responded, the offer being a text message or a multimedia message containing a picture or some animation.

Another example of an interactive application is a multi-screen advertising campaign that reaches out to subscribers behind a multitude of devices, possibly over several types of communication networks. For example as part of the campaign, some users may receive advertising content on their mobile handset, others may receive the same content in a different format on their IPTV screen, some other users that are online may receive altered content in the form of a web banner.

A further characteristic feature of the present invention is described in claim 2 and claim 10

Subsequently, the selected interactive application may be provisioned to the subscriber that performed the step of opting in to an interactive application of the plurality of interactive applications.

A still further characteristic feature of the present invention is described in claim 3 and claim 11.

The method further includes the step of managing the plurality of Interactive applications for provisioning where the plurality of Interactive applications being maintained by the central interactive application provisioning management server.

The managing of the interactive application includes the adding, modifying, deleting, reviewing of Interactive applications of the plurality of interactive applications. The managing may be applied via a dedicated interface of the central interactive application provisioning management server giving an administrator of the system the options to manage the set of interactive applications. In addition this interface may be adapted for external interactive applications providers having rights for managing interactive applications of the plurality of available interactive applications.

A further characteristic feature of the present invention is described in claim 4 and claim 12.

The method additionally may include the step of (and the related system may be adapted to) applying, based on the subscriber events, being activity and status, for determining an incentive for the subscriber receiving such interactive application.

Such subscriber events may be the step of opting-in, opting-out, pausing, Resuming, updating preferences, interacting with such interactive applications etc.

Such a meant incentive may be the receiving of free amount of free voice, text and content.

Still a further characteristic feature of the present invention is described in claim 5 and claim 13.

The method further includes the step of a third person, e.g. a service provider or network operator, managing or moderating via a further dedicated interface of the central interactive application provisioning management server the provisioning of an interactive application to a associated group of subscribers of the plurality of subscribers.

For instance a third person e.g. a certain network operator is able to manage provisioning of interactive applications where this third person may only be able to manage the provisioning of interactive applications to a restricted group of subscribers e.g. sole subscribers of meant network operator.

Such moderating may include the viewing and subsequently accepting or rejecting of the said provisioning of an Interactive application to (a group of) subscribers of said plurality of subscribers.

Another characteristic feature of the present invention is described in claim 6 and claim 14.

The method of the present invention further may include the step of applying subscriber actions in response to the receipt of an interactive application at a subscriber device of the subscriber for determining an improved subscriber profile of this subscriber.

Such subscriber actions may be opting-in for an interactive application, interacting with an interactive application or in other way updating the user profile. User profile (preferences) can be updated through amongst other: opt-in, response to housekeeping messages, unsolicited messages, web portal, Interactive Voice Response.

Such an improved subscriber profile may contain more detailed information describing the profile of the subscriber enabling a party for provisioning interactive applications, to better segment the target group from all potential subscribers that have opted-in resulting in better targeting the appropriate subscribers with appropriate interactive applications such as advertisements.

A possible method for provisioning the user profile is through the provisioning of a number of personae, from which subscribers can choose to best identify their own personality and interests.

Instead of first gathering a large user base, then segmenting, with the above remarks on span of attention, some basic segments are presented as a fictive person or avatar (personae) and provided to subscribers questioning which of the personae they think is best matching their personality.

This allows the advertising solution to quickly allocate users to broad segments, encapsulating several profile parameters in a single question. Afterwards the individual profile items can be fine-tuned using priority defined by the value for the service or the priority defined by the user.

Hence segmenting a large user base, a number of distinct profiles can be defined that average users in certain segments. Examples are young male interested in sports and cars.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a system for managing the provisioning of an Interactive application wherein the implementation of the present invention is realized.
Fig. 2 represents the functional structure of a central interactive application provisioning management server IAPMS according to the present invention.

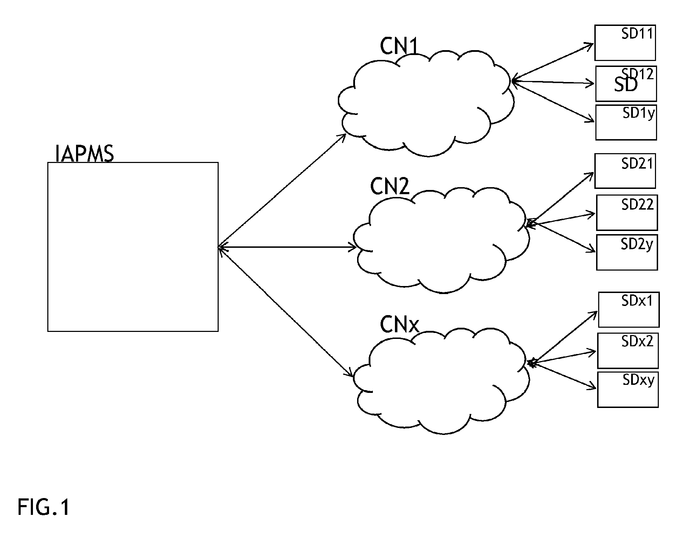

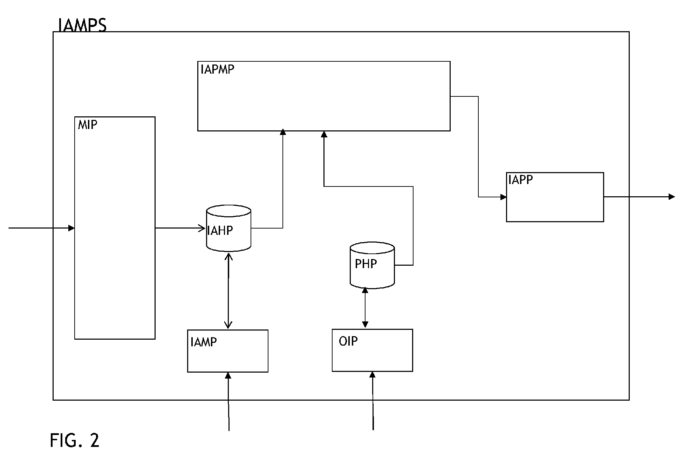

In the following paragraphs, referring to the drawings, an implementation of the system for managing the provisioning of an Interactive application according to the present invention will be described. In the first paragraph of this description the main elements of this network with its functional parts as presented in respective figures, FIG. 1 and FIG. 2 are described. In the second paragraph, all connections between the before mentioned network elements and described functional parts are defined. In the succeeding paragraph the actual execution of system for managing the provisioning of an Interactive application is described.

First essential elements are the subscriber devices SD11, SD12, SD1Y, SD21, SD22, SD2y, SDx1, SDx2, SDxy each being a communications device for retrieving services from a network operator via a communications network. Such communications devices may be any mobile phone, smart phone, PDA with a communications interface, fixed PC, television set or any like communications device being able to provision the subscriber with the received interactive applications.

Furthermore, a plurality of communications networks CN0, CN1, CNx are presented in FIG.1, where each communications network being exploited by a network operator that deals with provisioning communications services including interactive Applications which applications, to the respective by means of subscription coupled subscriber devices.

Such a communications network may be a Mobile communications network like GSM or fixed data or voice network or combination thereof or any other like communications network.

Such interactive Application may include any multimedia content asset such as a movie or a movie-trailer, sound like a song or spoken text, text messages, images, advertisements, reduction coupons or any combination or sequence of the previously mentioned content asset.

A further essential element of this embodiment of the present invention, as presented in Fig.1 is the central interactive application provisioning management server IAPMS for managing the provisioning of an Interactive application of a plurality of interactive applications to at least one subscriber device of a plurality of subscriber devices. This central interactive application provisioning management server IAPMS spans the plurality of coupled communication networks CN0, CN1, CNx where each communications network of said plurality of communications networks CN0, CN1, CNx, couples a plurality of subscriber devices. In other words, the central interactive application provisioning management server IAPMS manages the provisioning of the meant interactive applications over each of the communications networks to the coupled subscriber devices.

The central interactive application provisioning management server IAPMS comprises an opt-in part OIP that is adapted to support subscribers in opting-in for the provisioning of an interactive application, at the central interactive application provisioning management server IAPMS, for the obtaining preferences of these subscriber that identifying at least one Interactive application of a plurality of interactive applications in the opting-in. The central interactive application provisioning management server IAPMS may include a preferences holding part PHP being a database that stores all preferences of each of the subscribers. The opt-in part manages the opt-in process that collects user permission and preferences through interactive messaging, Interactive Voice Response or portal access. After initial opt-in, the opt-in part OIP may generate house messages as to refine the subscriber preferences through consecutive interactions with the individual.

User profile (preferences) can be updated through amongst other: opt-in, response messages or questions, unsolicited messages, web portal, Interactive Voice Response.

The central interactive application provisioning management server IAPMS further includes an interactive application provisioning management part IAPMP that is able to select, at least based on the preferences obtained in the opting-in of the subscriber, an interactive application for provisioning to the corresponding subscriber device over the associated communications network.

Based on the preferences of a certain subscriber that are stored in the preferences holding part PHP an appropriate application is selected from a plurality of interactive applications.

The central interactive application provisioning management server IAPMS further comprises an Interactive application provisioning part IAPP, that is able to provision the interactive application, which is selected for provisioning based on at least the preferences that are obtained in opting-in of the subscriber, to the subscriber device of the subscriber performing the opting-in for said at least one interactive application.

Furthermore, the central interactive application provisioning management server IAPMS includes an Interactive application managing part IAMP, that is able to manage Interactive applications of the plurality of Interactive applications where the interactive applications are being maintained under control of the central interactive application provisioning management server IAPMS.

Additionally, the central interactive application provisioning management server IAPMS includes an Interactive Application holding part IAHP for storing the plurality of interactive applications. Alternatively, this Interactive Application holding part IAHP alternatively may be located in another network element outside the central interactive application provisioning management server IAPMS, but managed from the central server.

The central interactive application provisioning management server IAPMS further may include a dedicated management interfacing part MIP that is adapted to enable a third person managing/moderating said provisioning of an interactive application to subscribers of said plurality of subscribers. The managing moderating may be applied under control of the interactive application provisioning management part IAPMP or in the alternative directly interacting with the Interactive application holding part.

The central interactive application provisioning management server IAPMS
has a first input-terminal 11 that is at the same time an input-terminal of the opt-in part OIP that further is coupled to the preferences holding part PHP that in turn is coupled to the an interactive application provisioning management part IAPMP.

The interactive application provisioning management part IAPMP further is coupled to the Interactive application provisioning part IAPP that in turn has an output terminal that is at the same time an output-terminal O1 of the central interactive application provisioning management server IAPMS.

The central interactive application provisioning management server IAPMS
has a first input-terminal that is at the same time an input-terminal I2 of the Interactive application managing part IAMP that further is coupled to the interactive application managing part IAHP that in turn is coupled to the an interactive application provisioning management part IAPMP. The management interfacing part MIP has an input-terminal that is at the same time an input-terminal I3 of the central interactive application provisioning management server IAPMS. The management interfacing part MIP may be coupled to the Interactive application holding part directly or alternatively via the interactive application provisioning management part IAPMP.

In order to explain the execution of the present invention it is supposed that the interactive Application holding part IAHP includes a plurality of Interactive applications. Here it is assumed that in this present embodiment such an Interactive application constitutes an interactive advertisement campaign. It is however to be noted that although this embodiment is described for an interactive advertisement campaign any other interactive application such as any multimedia content asset like a movie or a movie-trailer, sound like a song or spoken text, text messages, images, advertisements, reduction coupons or any combination or sequence of the previously mentioned content asset may be applicable.

Furthermore it is assumed that a certain subscriber SD21 being coupled to communications network CN 2 in this embodiment assumed to be a GSM network, encounters on some billboard or flyer or phone bill a phone-number for subscribing to a certain interactive application. Subsequently this subscriber is connected with the opt-in part OIP of the central interactive application provisioning management server IAPMS.

In an interaction between this subscriber and the opt-in part OIP certain preferences of this subscriber, possibly in relation with for example age, gender, cars, sports, etc, are obtained and subsequently stored in the preferences holding part PHP database. The subscriber in this case indicates he is a male between age 25 and 35 and interested in cars. These preferences may be stored in new entries of the holding part PHP database or alternatively update an already existing entry for this subscriber in the database.

The opt-in part OIP manages the opt-in process that collects user permission and preferences through interactive messaging, Interactive Voice Response or portal access. After initial opt-in, the opt-in part OIP may generate house messages as to refine the subscriber preferences through consecutive interactions with the individual.

Based on the preferences of the subscriber which are stored in an entry of the preferences holding part PHP database, the interactive application provisioning management part IAPMP selects, at least based on these preferences obtained in the opt-in of this subscriber, an interactive application, i.e. an advertisement campaign related to car-brand X, for provisioning to the subscriber device SD21 of the opted in subscriber.

Alternatively other criteria such as time and location may be applied in addition for selecting this Interactive application.

This interactive application being the advertising campaign may comprise a demo movie of a certain car, latest developments via email sms-message and possibly later on an invitation for a test ride of a car of brand X at the closest car car-dealer of brand X.

A rich database of subscriber preferences is the key enabler of (mobile) advertising to the MNO as well as the media industry. Subscriber permission and preferences are stored in a centralized repository preferences holding part PHP which is maintained by a single provider. This data is anonymised so that it cannot be associated with individual identity.

Subsequently after selecting the interactive application being the advertising campaign of car-brand X the Interactive application provisioning part IAPP, provisions the interactive application selected, to the subscriber device SD21, e.g. a mobile phone or Smartphone able to present movie trailers, receive SMS message or emails of the meant subscriber.

The provisioning of the interactive application being the advertising campaign of car-brand X is performed over the coupling communications network CN2 being the mobile communications network like GSM, UMTS or any other.

Alternatively a subscriber with subscriber device SDxy may opt-in at a certain portal website and indicate its subscriber preferences via this website, accessing the website via any, possibly other browsing device then device SDxy like PC, mobile terminal etc. over an internet connection. The actual provisioning of the interactive applications selected based on the preferences indicated during opt-in may be provisioned to the subscriber device SDxy via communications network CNx which may be any communications network like fixed or mobile voice or data networks.

Furthermore the central interactive application provisioning management server IAPMS further includes an Interactive application managing part IAMP that is able to manage such Interactive applications of said plurality of Interactive applications said interactive applications being maintained under control of the central interactive application provisioning management server IAPMS where the applications are maintained by the Interactive Applications holding part IAHP.

The managing of the interactive application includes the adding, modifying, deleting, accepting, rejecting, running, pausing, resuming of Interactive applications of the plurality of interactive applications. The managing may be applied via a dedicated interface, a management interfacing part MIP of the central interactive application provisioning management server giving an administrator of the system the options to manage the set of interactive applications. In addition this interface may be adapted for external interactive applications providers having rights for managing interactive applications of the plurality of available interactive applications.

The managing moderating may be applied under control of the interactive application provisioning management part IAPMP or in the alternative directly interacting with the Interactive application holding part.

The interactive application provisioning management part IAPMP further is adapted to apply subscriber actions in response to the receipt of an interactive application at a subscriber device of said subscriber for determining an incentive for said subscriber.

The user opting-in at an interactive application provisioning management part IAMPS may receive at opt-in, an incentive for this opt-in which incentive may be an amount of free text message, a data-bundle or call minutes.

The provider of the interactive application provisioning management part IAMPS can provision the system with a number of reward event rules that determine the reward condition, the size of the reward (in terms of a number of points convertible by the operator service provider in a tangible reward) and optionally the message to be sent to the user when the reward is granted. As an extension, the user can request a reward balance check from an advertising platform.

Also a customer care representative can log in to the system to check the reward status and provision a specific reward on behalf of the subscriber.

The invention provides a provisioning interface that allows each participating SP to design its own incentive program on an advertising platform.

The interactive application provisioning management part IAPMP further is adapted to enable a third person managing/moderating via a dedicated interface said provisioning of an interactive application to subscribers of said plurality of subscribers.

The method further includes the step of a third person, e.g. a service provider or network operator, managing or moderating via a further dedicated interface of the central interactive application provisioning management server the provisioning of an interactive application to a associated group of subscribers of the plurality of subscribers.

For instance a third person e.g. a certain network operator is able to manage provisioning of interactive applications where this third person may only be able to manage the provisioning of interactive applications to a restricted group of subscribers e.g. sole subscribers of meant network operator.

Such moderating may include the viewing and accepting or rejecting of the said provisioning of an Interactive application to (a group of) subscribers of said plurality of subscribers.

The interactive application provisioning management server IAMPs offers an interface to any of the network operators with a view on the interactive application, e.g. campaigns that have inventory reserved across their network. Such an interactive application, e.g. a campaign, must be in 'launched' or 'live' state for the Network Operators to view the campaigns.

The 'Action' drop-down list on the campaign overview page has an option for the Network Operators to block a particular Interactive application e.g. campaign.

If the Network Operators chooses to reject a campaign then a notification (email or SMS - depending on user preference) will be sent to the Campaign Manager. The campaign will still run live but only to the inventory owned by MNOs who have allowed the campaign to run. The state of the campaign will remain in either 'Live' or 'Launched', however the User Interface will indicate that the inventory has been partially blocked by changing the text to red and displaying 'Part-blocked' next to the status of the campaign. In a situation where the entire inventory belongs to a single Network Operators the status will display 'Blocked' if that Network Operators rejected the campaign.

The method applied by the system and related devices of the present invention further may include the step of applying subscriber actions in response to the receipt of an interactive application at a subscriber device of the subscriber for determining an improved subscriber profile of this subscriber.

Such subscriber actions may be opting-in for an interactive application, interacting with an interactive application or in other way updating the user profile.

Such an improved subscriber profile may contain more detailed information describing the profile of the subscriber enabling a party for moderating interactive applications, such as an operator or interactive application provider, to better segment the target group from all potential subscribers that have opted-in resulting in better targeting the appropriate subscribers with appropriate interactive applications such as advertisements.

Instead of first gathering a large user base, then segmenting, with the above remarks on span of attention, some basic segments are presented as a fictive person or avatar (personae) and provided to subscribers questioning which of the personae they think is best matching their personality.

This allows the advertising solution to quickly allocate users to broad segments, encapsulating several profile parameters in a single question. Afterwards the individual profile items can be fine-tuned using priority defined by the value for the service or the priority defined by the user.

Hence segmenting a large user base, a number of distinct profiles can be defined that average users in certain segments. Examples are young male interested in sports and cars.

*It is to be noted that following are potential embodiments of the present invention:*
An interactive application can be a direct marketing campaign that consists in sending a single text message to a targeted set of subscribers based on their preferences.

An interactive application can also be an advertising campaign that exchanges a scripted sequence of messages with a targeted set of subscribers, of which the first message is a teaser that presents a specific offering to those subscribers, to which the subscribers can individually respond to identify their specific interest in that offering, based on which the advertiser sends one out of several offers to each of the subscribers who responded, the offer being a text message or a multimedia message containing a picture or some animation.

Another example of an interactive application is a multi-screen advertising campaign that reaches out to subscribers behind a multitude of devices, possibly over several types of communication networks. For example as part of the campaign, some users may receive advertising content on their mobile handset, others may receive the same content in a different format on their IPTV screen, some other users that are online may receive altered content in the form of a web banner.

It is to be noted that the central interactive application provisioning management server includes a separate functional part that is adapted to apply subscriber actions in response to the receipt of an interactive application at a subscriber device of said subscriber for determining an incentive for said subscriber. This instead of the functionality being integrated in the interactive application provisioning management part.

Likewise the central interactive application provisioning management server may in addition include separate functional part that is adapted to enable a third person managing via a dedicated interface said provisioning of an interactive application to subscribers of said plurality of subscribers. This instead of the functionality being integrated in the interactive application provisioning management part.

The central interactive application provisioning management server further may include a separate functional part that is adapted to apply subscriber actions in response to the receipt of an interactive application at a subscriber device of said subscriber for determining an improved subscriber profile. This instead of the functionality being integrated in the interactive application provisioning management part.

*The* central interactive application provisioning management server *may include following functional elements:*

### Media Inventory Booking Tool

*the built-in media enquiry and booking tool to* sell the aggregated inventory to the Media Buyers & Planners in the Country market. This interface allows the media agents to book targeted campaigns that reach the audience segment of selection.

The booking tool includes a dashboard that provides metrics about the campaign performance, thereby giving advertisers a view on the actual ROI.

### Campaign & Inventory Manager

This core module allows the media seller to build different types of campaign templates that represent a specific target group and media inventory, like a specific digital dialogue or display advertising campaign.

It adopts a workflow process for booking and committing a campaign upon purchase. At that time the purchased piece of inventory (e.g. messaging volume) is allocated to the campaign. This way, Telco's inventory is respected and the traffic load imposed on the Telco network.

### Reporting and Invoicing

The central interactive application provisioning management server generates a report detailing the performance of a completed campaign, based on key performance indicators like number of impressions, open rate, response rate. This report is made to the attention of the Media Seller, together with the Invoice for the campaign.

Towards the Network Operator, the reports on the opt-in take-up and campaign statistics.

### Dialogue Manager & Ad Selection Server

The dialogue manager is a scripting tool that allows building the messaging dialogues with the end-user. This means the advertiser has the ability to derive meaningful dialogue with end users and place more meaningful offers to the end user based o that dialogue. This increases response rate, increases CPM value and ROI for advertiser.

The platform could also integrate with MNO applications that query the platform to select a targeted ad. For example a prepaid application can query the Ad Selection Server real-time for a personalized ad to insert in a credit balance notification to the end-user.

Further alternative embodiments of the present invention are disclosed in the following description.

It is to be noted that In the following description the central interactive application provisioning management server of the present invention is referred to as an ad selection server ADSS, the interactive application in the following being an advertisement campaign

The functional modules can be split into ADSS core functions and Delivery functions.

The core functions of ADSS include: service management, campaign management, forecast & inventory management, creative management, ad selection & orchestration, the product catalogue, pricing systems, Consumer profiles, Opt-in and Subscriber reward, Reporting.

Ad-delivery modules comprise AdWeb, AdWAP, AdText, and AdPush which are potential implementations of the interactive application provisioning part.

Adapters are optional components that can be developed on a project basis, to integrate to the external environment.

### Service management

The service provider who wants to monetize its services has to declare these services within ADSS.

### Service properties

The service provider can assign some constraint (legal and technical) to the Advertisings exposed with its service.

The currently supported service types are Push or Pull.

For Push services, the service providers defines the opening times of the service, e.g.: Mo-Fri 8-18, Saturday 9-12.

### Subscriber identification

The identification of a subscriber may service-dependant. ADSS allows however to correlate the same consumer on different services with different identification methods. In this release, ADSS supports 3 identification types: MSISDN, Address (e.g. IP address), and e-mail. In the future, ADSS will support more identification types, e.g. login, cookies, IPTV set-top-box MAC address or a middleware identifier.

### Define channel for contextual advertising

Thanks to targeting, it's possible to select different ads according to consumer profile. However, advertising world is working for decades with a contextual approach. Ads about cars are surrounding content about cars.

Behavioural targeting has to be considered as an added value and not as a replacing value. It significantly adds value to general purpose content. Combined with contextual approach, it becomes very accurate.

In order to support contextual advertising, the service provider has to segment its service into different sections/channels. For example, a web portal can be segmented in the following channels:
- Home page - general purpose - enhanced by behavioural
- Cars
- Kids area
- E-Cards
- Real-estate
- ...

### Define formats

The service provider also selects, within a list of formats, the formats supported by the services to ensure the right level of impact combined with affordable level of intrusiveness.

The list of formats is maintained by the system administrator. ADSS is pre-populated with dozens of formats recommended by IAM and MMA. I

### Define interactivity model:

On the different personal media services, the interactivity can be proposed in different ways. If online is today driven by click-through, the concept is extended to mobile portals.

Interactive Television now offers red-button approach. While I'm watching an ad, I can push the red-button on my remote-control to land on a brand portal aimed to engage a relation (purchase, survey, fun, information, participation to a draw, etc...).

### Forecast & inventory management

Inventory management is the key success factor of an advertising system. The quality of the inventory management determines the revenue that can be generated from advertising.

Thanks to a smart inventory management, it is possible to increase the premium ad space. On one hand, an ad space which is not sold in advance is sold at a far lower price. On the other hand, applying overbooking creates disappointment of brands, expecting the reach that they planned for the campaign.

ADSS Core ensures a specific inventory management function covering the two challenges of targeted ad space inventory.

The first soft point of inventory management is linked to the forecasts. The inventory lists all the opportunities for display, click-through and actions. Obviously, the inventory is based on forecasts since it is impossible to know in advance how many persons exactly will use a service (or browse a web page) on a specific day.

Targeted advertising creates a second soft point. The inventory management becomes more complex than simple "physical" inventory. Taken without any further forecast, segmentation in different dimensions creates overlap in the inventory. For example, a campaign can target young ladies while another campaign can target mothers. That results to the possibility for an ad space to deliver two ads within the same ad space. If segment forecasts would not take overlap into account, that would mean that only one ad space would be booked for the two different campaigns, creating overbooking.

### Physical & Segmented inventory

ADSS maintains inventory values for each service-channel and for each format (IPTV EPG, Web site, etc...).

In order to address the targeting soft point, ADSS also manages an inventory relative to the consumer segments, per services - channels - formats. That system allows an estimation of the overlap between consumer segments.

### Inventory state

The inventory (both physical and segmented inventory) has a state: it is either free (not used by a campaign), or booked by a campaign. The inventory state is checked before a campaign is booked, in order not to oversell the inventory.

Each campaign is assigned within ADSS to use a part of the physical and segmented inventory.

### Inventory forecast

Each time ADSS receives an "ad request", it updates counters: a counter representing the physical inventory, and a counter representing the segmented use of the inventory. The counters are maintained on a daily basis, consolidated on a weekly and monthly basis.

The forecasts (representing the future inventory - physical and segmented), are calculated based on the corresponding counters. The forecast system is based on the counters of the past days, weeks and months. The forecasts are calculated daily, and the inventory forecast is made for the following 6 months.

ADSS makes an estimation of the overlap between segments for the different services - channels - formats - based on some heuristic factors. The ADSS forecast feature is continuously improving with the future releases.

### Adjustments

By default, and as a facility, the inventory value is filled in with the forecast value calculated by ADSS. Due to external factors (unexpected traffic, weather, etc...), the inventory forecasts are not always accurate.

ADSS offers the capability to make adjustments: An adjustment is a manual change of the inventory, overwriting the forecast. That task is performed by a trafficker.

### Reporting

Visual representation of the inventory is proposed to the trafficker. He can rapidly check the level of booking of the inventory according to different dimensions.

He gets reports of all the campaign with the level of fulfilment according to the initial plan. Based on these reports, he can refine adjust the inventory and/or re-schedule some campaigns.

### Notifications

When the inventory is not fulfilled at a certain level a certain period before the run, alerts are generated by ADSS to product managers to allow the product manager to promote the inventory and/or to create specific products.

When the campaigns are not fulfilled at a minimum percentage, ADSS generates an alert for the campaign so that an action is taken to re-prioritize or re-schedule the campaign.

### Target profiles

The profiles are the base for ADSS to perform targeted advertising. The target profiles are defined for use into campaigns.

### Segmentation class

A segment class defines a set of segments in one dimension eg: age, gender, social status, car preference, etc... The segmentation classes can be freely defined by the profile provider with no limitations.

### Segment

A segment is a value within a class of segments. There is no limit in ADSS to the number of possible segment values within a segment class, however the recommendation is to have maximum 6 values for better readability.

This capability enables flexibility for the product manager to offer relevant segmentation for its product.

E.g. of segment values: age: 10-15, 16-25, 26-40, 41-55, 56-70, 71-99.

### Target profiles

A target profile is a selection of segments in different classes. The logic rules across classes is an AND. The logic within classes is an OR.

E.g. profile1: Active_women: gender= women & (age= 26-40 or age=41-55)

When two target profiles are used within a campaign, the rule is OR.

The target profiles are used within products or within hyper-targeted campaigns.

### Product price & price plan

The product manager assigns a price to each product presented in the catalogue.

The price can be a fixed price without any regard to the number of exposures.

The price can also be a price plan taking into account CPM, CPC and CPA. In this option, there is the possibility to charge the ordered exposures, or the delivered exposures.

### Promotions

The product manager can assign promotions to the different products. The promotion defines a starting day, a closing day and a rebate.

Promotions are outlined within the catalogue presentation.

### Discounts

Sales agents can proceed to discount when a product is purchased. The discount is valid for a specific campaign. The rules to set the maximum discount are defined within the price plan.

### Hyper-targeting

For hyper-targeted campaigns, the price is defined by the sales agent according to the specific campaign settings.

Sales agent can then sell several units of a product. Thanks to this approach, standard methods for product sales can be applied in the advertising world.

ADSS also supports hyper-targeted campaign as a product. In this case, the pricing is subject to negotiations according to the specific features activated within the campaign.

### Define a product

Since the product is a campaign template, the product is defined by all the campaign properties. The product manager manages the product catalogue.

The main properties of a product related to the campaign deployment are:
- Product name
- Product id
- Description
- Keywords
- Number of exposures
- Duration
- Exclusivity
- The list of services and channels on which the campaign is deployed
- The list of formats
- The list of target profiles addressed by the campaign

### Type of products: standard and Hyper-targeted

Personal media offers hyper-targeting. This capability significantly increases the value of the ad space. Hyper-targeted campaigns however represent a small percentage of the inventory usage today. It also makes the inventory management more complex since more campaign target rich persons than poor ones.

This is why ADSS supports two types of products: the standard products, and hyper-targeted products.

In standard products, all the parameters of the campaigns are specified within the product, and cannot be changed by the sales agent.

In hyper-targeted products, most of the parameters can be changed by the sales agent: the services and channels, the duration, the number of exposures, the profiles.

The price for such hyper-targeted campaigns is clearly higher than any standard product.

### Manage the campaign

Once the product is sold, the ad agency is entitled to customize the campaign - based on a login/password - in order to publish a number of creatives, select within this list the ads that will be presented, the priority of the ad among others and the constraints for the ads.

The campaign can be managed all along the campaign period according to the results of the continuous reports provided by ADSS.

Please see the section "campaign management".

### Sales management

Thanks to the product management features of ADSS, ad inventory sales become easier. On top of that, and integration between ADSS and a sales force environment could be done on project basis.

### Product catalogue navigation

The sales agent can order the product catalogue based on different criteria:
- Per name and description
- per duration
- per quantity
- per budget
- per profile

### Product purchase

When purchasing a product, the sales agent views the detailed view of the product including:
- Product name
- Product Id
- Description - teaser including performance statistics
- Quantity of exposures
- Duration
- List of services
- List of segments
- Price/price plan
- Promotion

The sales agent must fill in the following information:
- The Advertiser (buyer of the campaign);
- The start date, and
- The number of units for a product.

The number of units applies to the quantity and not to the duration. For example, for a product Web-fortnight covering 100000 exposures in 2 weeks, buying 2 units result to 200000 exposures in 2 weeks.

For hyper-targeted products, the sales agent may select the individual services, channels and target profiles.

At this time, the campaign life-cycle starts.

### Discounts

A sales agent can proceed to discount on the campaign. He is offered the capability to fill in a special textbox in order to indicate the rebate.

The maximum discount for a campaign is defined in the product.

### Campaign management

Campaign management defines the process of the campaign registration as well as campaign monitoring.

ADSS offers a specific User Interface for campaign management. This UI offers a full flexibility for ad agencies to define a wide variety of campaigns. However, for most campaigns, the interface is too complex and could lead to un-manageable inventory.

### Campaign lifecycle

Since the inventory is limited, it is important to maintain a campaign lifecycle. A campaign is first booked within ADSS before being confirmed. At the booking level, the inventory is checked and some ad space is reserved for the campaign. A campaign needs to be confirmed within a specific delay (number of days) after the booking. If the campaign is not confirmed, alerts are generated by the system and/or the campaign can be freed.

### Booking

When the ad agency is willing to proceed with the next step, the campaign can be booked for a specific date.

At this stage, the availability of the inventory is checked for the required period and for the quantity defined as number of exposures for the product. Once the campaign is booked, the inventory is updated.

If the inventory is not sufficient, the number of units must be decreased, or the start date of the campaign must be changed.

### Confirmation

The booked campaign must be confirmed a number of days before the campaign start date. If the campaign is not confirmed, then it must be withdrawn (cancelled).

### Cancellation

It is possible to cancel a campaign that is booked or confirmed. The inventory is then freed but a cancellation fee is due to the media agency, because it will be difficult to sell the inventory in a short timeframe.

### Define creatives

When the product is sold, the ad agency receives an account in order to define more accurately the interactive application e.g. a campaign: list of creatives, properties of the creatives, priorities of the creatives, the date and time restrictions for the creatives (e.g. one creative for the morning, another creative for the evening), the interactivity link.

Moreover, ADSS offers the possibility to create sequence of ads for a consumer. This capability enables the brand to tell stories to the consumers. ADSS keeps a track of the ad presented to the consumer and ensures that the ads are presented sequentially.

In the future, at campaign level, ADSS will offer the storyboarding capabilities. This will offer the advertising world an un-equal opportunity to engage a relation with the consumer on the different screens leveraging on the screen assets.

### Frequency capping

It is possible to define the frequency capping: this is the maximum number of times an individual consumer will see a creative of the campaign (e.g. 7 exposures per consumer). The frequency capping has to be defined by the advertiser, since this value is dependent on the brand message and the brand image.

### Reporting

Once the campaign has started running, reports can be viewed on the campaign dashboard. For each dimension of the campaign, the following key campaign figures are presented within the dashboard:
- Unique visitors - define the number of consumers having viewed the campaign
- Exposures - defines the number of times an ad has been presented
- Click-through-Rate (CTR) - the percentage of hits having lead to an interactivity
- Action-Rate (AR) - the percentage of hits having lead to an action

The reports are presented for following dimensions:
- Key campaign figures per service/channel
- Key campaign figures per format
- Key campaign figures per segment
- Key campaign figures per creative

Further, it is possible to detail the Key campaign figures:
- Per day
- per time of day - within a day

All the figures can be shown on the ADSS GUI in tabular and graphical format. They can also be exported to Excel format.

Within the campaign UI, it's possible to get a near-real time view of these key campaign figures.

Based on reports of ADSS, it is possible to determine the best performing ads and assign higher priorities on these ones.

### Notifications

The campaign owner is notified of following events:
- Un-expected low click-though-rate (compared with the mean of the service)
- Lower display figures (less than x %) than expected y days before the end of the campaign - where x and y are part of the product configuration set by the product manager

### Billing

The campaign billing is managed by ADSS. The embedded billing engine takes into account the pricing elements and produces billing information, allowing the media agency to bill the Ad agency for the campaigns. For the information on the billable elements, please refer to the section product management and pricing.

### Creative Management

Once the product is sold, it is possible to customize the campaign to define the way the advertising space will be used. This is based on a set of creatives to attach to the campaign.

This assumes that a set of creatives have been provisioned in the system.

The creatives are either published on a specific server or referenced to be hosted at another location (URL).

### Ingestion

The creative manager has the task to manage its creatives. The creative files are transferred using FTP.

The creative manager assigns meta-data to the files during the ingestion. Meta-data concern the format and enable a check of the format versus the definition in the standards as IAB or MMA.

### Declaration

When a campaign is using an ad creative, the campaign UI offers the possibility to select an ad previously ingested and accessible by the agency managing the campaign.

### Publication on a service

When an ad is declared as used by a service, it is replicated by ADSS on the ad server linked to the service if it is relevant.

The publication onto the service is done through a script that is associated to the service. ADSS offers predefined scripts suitable for AdWeb, AdWAP, AdText, and AdPush.

For other services, a specialized delivery, materialized by a specific script needs to be foreseen.

The script may foresee an exchange of Ad reference, for further reference in the Ad selection. When an ad has to be displayed by the service, ADSS receives an ad selection request. ADSS answers with the ad reference stored for the specific service raising the query.

This approach allows a totally scalable and easy way to activate various ad spaces on different services.

### Consumer profile

Until now, the system has been described based on the assumption that consumer profile data were available. This section focuses on the way to collect and provision consumer profiles.

### What is a consumer profile

A consumer profile is the set of data collected about a consumer and directly relevant for advertising world. Data collected about a consumer include some keys (to identify the subscriber in different services) and segments (to classify the consumer).

Each profile provider provides, either through files or through SOAP interface, a list of keys and segments for consumers. This data is kept as owned by the profile provider.

ADSS offers the possibility for the product manager to build profiles based on the segmentation data.

The consumer profile is the consolidation of all data of a consumer, even if coming from various sources.

### Consumers and Subscribers

The same person is considered both a consumer and a subscriber, depending on the perspective and the relationship:

When the person is in a relationship with the service provider, it is considered as a subscriber to one or more services.

When the person is in a relationship with the profile provider (providing consumer data, segmentation, profile...), then it is considered as a consumer. The Advertisers and the Brands will also refer to consumers.

The relationship between subscribers and consumers is managed by ADSS. From the person point of view, it is only a subscriber, because the person just subscribes to services of a service provider, and opts-in to receiving Ads.

### Subscriber opt-in

ADSS handles the subscriber opt-in and opt-out via a batch interface or a web based interface.

The opt-in is managed for each service, allowing a subscriber to opt-in e.g. for a set of services but opt-out for another set of services.

### Subscriber reward

The reward module offers the possibility to manage the subscriber rewards. The trigger for rewards can be based on opt-in, number of Ads viewed, number of Ads interactions. The reward type can be a number of free minutes or SMS, or a money value.

### Push frequency capping

The service provider will accept push campaign if the number of push messages is within the tolerance of its subscribers. This mechanic prevents spamming effect.

This is why ADSS supports a maximum number of Push messages on an individual subscriber level. The limits can be expressed in number of messages per day, per week or per month, e.g. 3 messages/week, 11 messages/month. The limit is for all the Push services of the service provider to which the subscriber has opt-in, e.g. Push SMS, WAP Push, Push MMS.

### Consumer data ingestion

Consumer profile data can be ingested based on CSV files with a structured pre-declared within ADSS for a particular profile provider.

Consumer profile data can also be provisioned through an online SOAP interface.

### Location based campaign

Advertising world is obviously interested in the consumer location.

We however need to be accurate with the understanding of location. A lot of service providers consider that immediate location is highly demanded by advertising world. This is indeed the case when the location is given with a high level of accuracy (meters) or within a relevant context (city guide).

Advertising world is interested as well in home and work location (typically based on addresses). Thanks to this information, it is possible to determine the shopping area and thus propose relevant ads.

ADSS today supports the possibility to consider segments as location segments and thus to advertise in a specific area. As a first range, the granularity does not require to be very high. Regional ads are sufficient.

In a next release, advanced location based campaign will be supported by ADSS. In this model, thanks to a map, brand manager will be able to accurately define the areas where the campaign has to be deployed. This will extend the addressable market from national brands to regional brands or local shops.

### External ad networks

Selling the new media ad space with a dedicated agency makes sense when the size of the inventory is sufficient. It can significantly increase the revenue in comparison to a delegation of the sales to an external ad network.

However, anyway, after the sales period, unsold inventory remains. This is named remnants or surplus. This inventory can be sold to external ad networks.

ADSS supports, on project basis, the possibility to select an ad network when no ad can be found locally. In this case, ADSS selects the ad network based on the service and consumer profile. AdWeb/AdWAP/AdText generates the right logic in order to address the selected ad network.

Thanks to this approach, all the sales are consolidated within the same environment.

For each ad network, an integration "ad delivery" module has to be deployed within the ad server and a specific module has to be inserted to digest the ad network analytics.

### Ad selection

When all the landscape is setup, services are declared, campaigns are registered and profiles are ingested, the system is ready to receive "ad selection requests".

On this receipt, ADSS proceeds to the following process:
- It identifies the subscriber and its profile
- It identifies the service, channel and format
- It selects the most appropriate campaign, matching the profile
- It checks the constraint of the campaign against consumer and service
- It selects an ad within the list of ads assigned to the campaign for the format
- It then answers with an ad reference within the ad server
- After having raised the answer, it also updates a set of counters and stores the events.

ADSS also receives the notifications of the exposures, click-through/interactivity and actions. These events are stored within the system for further treatment. They can be displayed in the campaign dashboard.

### Ad assignment

The ad selection process must be very efficient and the delay must be less than 200 ms. For this reason, an "ad assignment process" is run offline in order to prepare the database and optimize the ad selection process.

### Priority handling

When ADSS receives an ad request and several ads can fulfil the requirement, ADSS selects the ad with the highest priority. Among the campaigns with the same priority level, a random campaign selection is done. Within a particular campaign, if there is more than one creative matching the criteria, a random selection is done.

The priority assigned by ADSS is based on the value of the ad (price): the higher the Ad price, the higher the priority. The price selection criterion is obvious to increase the revenue.

Because of the un-accuracy of the inventory in some circumstances, it is possible that some campaign do not reach their initial objective. The trafficker has the possibility to overrule the automatic priority assignment done by ADSS, in order to make sure that traffic commitments are fulfilled.

### Push

In case of push services (direct marketing), the ad selection takes into consideration the Push frequency capping.

Thanks to the flexible user management, it is possible to assign a user a set of roles. Most of roles are also assigned to specific objects to support multi-tenant deployment models and Chinese walls between data.

### Consumer profile ingestion

Consumer profile can be ingested based on pre-defined CSV files. The files can be transferred via ADSS User Interface.

The data can also be provisioned through an online SOAP interface (HTTP or HTTPS)

### Subscriber Opt-in

Subscriber Opt-in data can be ingested based on pre-defined CSV files. The files can be transferred via ADSS User Interface.

The data can also be provisioned through an online SOAP interface (HTTP or HTTPS)

### Ad selection

Ad selection, click through (interaction) and acquisitions (actions) can be reported to ADSS via a SOAP interface. The WSDL is provided by ADSS.Ad delivery modules:

### AdWeb & AdWAP

AdWAP is a service that allows WAP sites to display Advertising messages. AdWAP is a module of ADSS. AdWeb is the same, for Web services.

The regular WAP/WEB service offered by service provider for the exclusive use of their subscribers, can be enriched with advertisement. The objective of AdWAP is to deliver targeted advertising on the WAP/WEB service.

Service provider registers WAP/WEB pages into AdWAP/AdWEB, and defines zones for Advertising. Service providers customers who use their mobile handset to go to a WAP site registered within AdWAP, will see Advertising messages targeted for them.

AdWeb interworks with browsers that are JavaScript enabled (eg PC browsers, high end mobile terminals, enhanced Set-top boxes), while AdWAP works with browsers that are not (eg standard mobile terminals, standard set-top-boxes).

The portal on which ads are inserted, need to be integrated with AdWeb/AdWAP. This occurs in the following steps:
1) The Portal pages requiring Ads need to be configured into AdWAP;
2) AdWAP specifies the script that must be inserted into the Portal is specified by AdWAP; The script makes a reference to AdWAP;
3) The Portal integrates the script;
4) Each time a subscriber accesses the Portal, the script references the ADSS, and an Ad is provided and exposed on the defined zone of the Portal.

In the campaign, the Advertiser may specify an interactive link, or Brand landing site. When the subscriber clicks on the Ad, a redirection to the Brand landing site is performed.

The advantage of this solution is that the click and post-click actions are automatically reported to ADSS, the campaign reporting includes the click and post-click actions.

AdWAP automatically selects the right size of the picture according to the format required within the page and the screen size detected based on user-agent profile and AdWAP database.

### AdText

AdText is a service that allows services to display Advertising messages in Text format. AdText is suited for SMS Advertising. AdText delivers the Advertising message in text format, with a possible reference to a brand landing site, in case of interactivity.

AdText works in a similar way to AdWeb and AdWAP, however the delivery is optimized for text format. It includes options to manage different encoding schemes required in mobile networks.

### AdPush

AdPush is a generic push module interacting with ADSS core and with some specific push service adapters to be used to connect to the different kinds of messaging systems: SMS-C, MMS-C, Push-Proxy Gateway.

The AdPush adapter is a project specific module that is used to integrate with a message delivery system.

AdPush regularly polls ADSS core in order to check if there is a campaign applicable on Push Services. When AdPush detects a campaign to run, it invokes ADSS core in order to select the list of consumers to reach.

AdPush ensures throttling mechanism to smooth the load on the messaging services. The maximum load is a configuration parameter of the service in ADSS.

AdPush ensures the queries of the list of consumers to page through messages. AdPush generates the message using an open API.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for managing the provisioning of an Interactive application of a plurality of interactive applications to at least one subscriber device of a plurality of subscriber devices, **CHARACTERISED IN THAT**, said managing said provisioning of said Interactive application is under control of a central interactive application provisioning management server (IAPMS) spanning a plurality of coupled communication networks (CN0, CN1, CNx), each communications network of said plurality of communications networks (CN0, CN1, CNx), coupling a plurality of subscriber devices and **in that** said method further comprises the steps of:
a. opting in by a subscriber of said plurality of subscribers at said central interactive application provisioning management server (IAPMS) for requesting the provisioning of at least one Interactive application of a plurality of interactive applications to said subscriber; and
b. said interactive application provisioning management server (IAPMS), at least based on said step of opting-in of said subscriber, selecting an interactive application for provisioning to said subscriber device associated with said communications network of said plurality of communications networks.

2. Method for managing the provisioning of an interactive application according to claim 1, **CHARACTERISED IN THAT** said method further includes the step of:
c. provisioning said selected interactive application to said subscriber device of said subscriber performing said step of opting in to said interactive application of said plurality of interactive applications.

3. Method for managing the provisioning of an interactive application according to claim 1 or claim 2, **CHARACTERISED IN THAT** said method further includes the step of:
d. managing said Interactive applications of said plurality of Interactive applications maintained by said central interactive application provisioning management server (IAPMS).

4. Method for managing the provisioning of an interactive application according to any of claims 1 to 3, **CHARACTERISED IN THAT** said method further includes the step of:
e. applying subscriber actions in response to the receipt of an interactive application at a subscriber device of said subscriber for determining an incentive for said subscriber.

5. Method for managing the provisioning of an interactive application according to any of claims 1 to 3, **CHARACTERISED IN THAT** said method further includes the step of:
e. a third person managing via a dedicated interface said provisioning of an interactive application to subscribers of said plurality of subscribers.

6. Method for managing the provisioning of an interactive application according to any of claims 1 to 3, **CHARACTERISED IN THAT** said method further includes the step of:
e. applying subscriber actions in response to the receipt of an interactive application at a subscriber device of said subscriber for determining an improved subscriber profile.

7. System for managing the provisioning of an Interactive application of a plurality of interactive applications to at least one subscriber device of a plurality of subscriber devices, **CHARACTERISED IN THAT** said system comprises a central interactive application provisioning management server (IAPMS) adapted to control said managing of said provisioning of said Interactive application and spanning a plurality of coupled communication networks (CN0, CN1, CNx), each communications network of said plurality of communications networks (CN0, CN1, CNx) coupling a plurality of subscriber devices (SD11, SD12, SD1Y, SD21, SD22, SD2y, SDx1, SDx2, SDxy) and **in that** said system further comprises:
a. an opt-in part (OIP), adapted to support opting-in for provisioning an interactive application, by a subscriber of said plurality of subscribers, at said central interactive application provisioning management server (IAPMS), obtaining preferences of said subscriber for identifying at least one Interactive application of a plurality of interactive applications in said opting-in; and
b. an interactive application provisioning management part (IAPMP), adapted to select, at least based on said preferences obtained in said opting-in of said subscriber, an interactive application for provisioning to said subscriber device (associated with said communications network of said plurality of communications networks.)

8. System for managing the provisioning of an interactive application according to claim 7, **CHARACTERISED IN THAT** said system further includes:
c. an Interactive application provisioning part (IAPP), adapted to provision said interactive application, selected based on at least said preferences obtained in said opting-in of said subscriber, to said subscriber device of said subscriber performing said opting-in for said at least one interactive application of said plurality of interactive applications.

9. A central interactive application provisioning management server (IAPMS) for use in the system according to claim 7, **CHARACTERISED IN THAT** said central interactive application provisioning management server (IAPMS) comprises:
a. an opt-in part (OIP), adapted to support a subscriber of said plurality of subscribers in opting-in for provisioning an interactive application, at said central interactive application provisioning management server (IAPMS), for obtaining preferences of said subscriber for identifying at least one Interactive application of said plurality of interactive applications in said opting-in; and
b. an interactive application provisioning management part (IAPMP), adapted to select, at least based on said preferences obtained in said opting-in of said subscriber, an interactive application for provisioning to said subscriber device (associated with said communications network of said plurality of communications networks.)

10. A central interactive application provisioning management server (IAPMS) according to claim 9, **CHARACTERISED IN THAT** said central interactive application provisioning management server (IAPMS) further comprises:
c. an Interactive application provisioning part (IAPP), adapted to provision said interactive application, selected based on at least said preferences obtained in said opting-in of said subscriber, to said subscriber device of said subscriber performing said opting-in for said at least one interactive application of said plurality of interactive applications.

11. A central interactive application provisioning management server (IAPMS) according to claim 9 or claim 10, **CHARACTERISED IN THAT** said central interactive application provisioning management server (IAPMS) further includes:
d. an Interactive application managing part (IAMP), adapted to manage Interactive applications of said plurality of Interactive applications said interactive applications being maintained under control of said central interactive application provisioning management server (IAPMS).

12. A central interactive application provisioning management server (IAPMS) according to claim 9 or claim 10, **CHARACTERISED IN THAT** said interactive application provisioning management part (IAPMP) further is adapted to apply subscriber actions in response to the receipt of an interactive application at a subscriber device of said subscriber for determining an incentive for said subscriber.

13. A central interactive application provisioning management server (IAPMS) according to claim 9 or claim 10, **CHARACTERISED IN THAT** said interactive application provisioning management part (IAPMP) further is adapted to enable a third person managing/moderating via a dedicated interface said provisioning of an interactive application to subscribers of said plurality of subscribers.

14. A central interactive application provisioning management server (IAPMS) according to claim 9 or claim 10, **CHARACTERISED IN THAT** said interactive application provisioning management part (IAPMP) further is adapted to apply subscriber actions in response to the receipt of an interactive application at a subscriber device of said subscriber for determining an improved subscriber profile.
